# EUROPEAN PATENT SPECIFICATION

(11) **EP 3 341 616 B1**
(45) Date of publication and mention of the grant of the patent: **23.08.2023**
(21) Application number: 16757653.7
(22) Date of filing: 26.08.2016
(51) Int. Cl.: F16B 5/01, F16B 25/00, F16B 25/10

(54) **A FIBERBOARD SUPPORTING DEVICE**
FASERPLATTENSTÜTZVORRICHTUNG
DISPOSITIF DE SUPPORT DE PANNEAU DE FIBRES

(30) Priority: 27.08.2015 SE 1551115
(43) Date of publication of application: 04.07.2018
(73) Proprietor: IKEA Supply AG, 4133 Pratteln (CH)
(72) Inventor: ANDERSSON, Benny, 343 37 Älmhult (SE); CARLSSON, Mikael, 352 51 Växjö (SE)
(74) Representative: Ström & Gulliksson AB
(86) International application number: PCT/EP2016/070226
(87) International publication number: WO 2017/032889

(56) References cited:
- EP-A1- 0 129 404
- US-A- 3 478 639
- US-A- 5 433 570
- US-A1- 2015 083 873

## Description

### Technical Field

The present invention relates to a fiberboard attachment kit. More particularly, the present invention relates to an attachment kit for improving the function when screwing components to said fiberboard.

### Background

Fiberboards, i.e. planar structures of wood fibers are commonly used in e.g. the furniture industry. Furniture pieces traditionally being manufactured from solid wood, such as side pieces for chests of drawers, cupboards, bookcases etc., may instead be manufactured by a rigid frame structure being covered on both sides by fiberboard panels. Such constructions greatly reduces weight and product cost for the final furniture pieces.

It is sometimes desired to attach various components to the fiberboard panels. For example, a fiberboard panel forming part of a side piece of a chest of drawers will have a roller slide rail attached to it, or a fiberboard panel forming part of a bookcase side piece may have a bracket attached to it for supporting a bookshelf. These components are often attached to the respective fiberboard panel using screws. However, some problems are associated with the use of screws for fiberboard panels, especially when the fiberboard panel is relatively thin, in particular when the fiberboard panel has a thickness of less than about 5 mm.

First of all, it is often difficult to know when the screw has reached its end position. As a result the screw is often overturned, which in practice means that the attachment looses most of its strength.

Secondly, the threads of the screw will draw fiberboard material towards the surface of the fiberboard panel. This phenomenon is commonly known as material bulging. A small circular ridge will be formed at the surface of the fiberboard panel around the screw, which will not only prevent the screw head from resting onto the otherwise planar fiberboard panel surface, but the bulging will also remain as a permanent defect once the screw is removed. Document EP0129404 A1 discloses a fiberboard attachment kit of the prior art.

In view of the above, improved ways of screwing components to fiberboard panels are therefore desired.

### Summary

It is an object of the present invention to overcome the above-mentioned drawbacks of the prior art.

According to the invention, a fiberboard attachment kit, according to claim 1, is provided. The kit comprises a fiberboard supporting device adapted for connecting devices to fiberboard panels is provided. The supporting device comprises a disc-like member having a through-hole for receiving an associated screw, said screw having a shank provided with threads, and a supporting member arranged on a fiberboard panel side of the disc-like member to ensure rigid attachment to the disc-like member to the fiberboard panel thereby preventing material bulging, wherein the supporting member has a through-hole being aligned with the through-hole of the disc-like member. The diameter of the through-hole of the supporting member is smaller than the major diameter of the threads and is also smaller than the diameter of the through-hole of the disc-like member. The length of the screw is greater than a total thickness of the disc-like member and the supporting member such as to attach the disc-like member and the supporting member to the fiberboard panel.

The supporting member is adapted to lie between the disc-like member and a fiberboard panel to which the fiberboard supporting device is to be connected. Hence, the supporting member prevents any fiberboard material to be forced upwards beyond the supporting member, whereby the risk for bulging is reduced. Furthermore, fiber material is compacted, by the thread, against the supporting member. This forms a zone of compacted fiber material, which improves the fastening of the screw to the fiberboard panel.

The diameter of the through-hole of the disc-like member may be smaller than the diameter of a screw head of the screw. Hence the disc-like member is capable of distributing and transmitting pressure downwards from the screw head.

The through hole of the supporting member may form a collar around the shank of the screw, wherein the diameter of the through-hole is less than the sum of the diameter of the shank and 0.25, more preferably 0.15, times the difference between the diameter of the threads and the diameter of the shank. Having the diameter of the through hole of the supporting member denoted DH1, the diameter of the shank denoted DS, and the diameter of the threads denoted DT, this means that DH1 < DS + 0,25*(DT-DS), more preferably DH1 < DS + 0,15*(DT-DS). In this embodiment, it will be possible to screw through the supporting member without excessive force, with less risk of deforming the supporting member.

The through hole of the supporting member may form a collar around the shank of the screw, wherein the diameter of the through-hole is larger than the difference between the diameter of the threads and 0.25, more preferably 0.15, times the difference between the diameter of the threads and the diameter of the shank. This means that DH1 > DS - 0,25*(DT-DS), more preferably DH1 > DS - 0,15*(DT-DS). In this embodiment, the supporting member will enclose the shank in a tight manner such that fiber material will not be allowed to be forced upwards passing the supporting member. Hence bulging is prevented.

According to one embodiment the diameter of the through hole of the supporting member meets both of the above mentioned conditions, meaning DS - 0,25*(DT-DS) < DH1 < DS + 0,25*(DT-DS), more preferably DS - 0,15*(DT-DS) < DH1 < DS + 0,15*(DT-DS). In this embodiment there will be achieved a supporting member that is easy to screw in, and which also is efficient in preventing fiber material from being lifted upwards.

The through hole of the supporting member may form a collar around the shank of the screw, wherein the diameter of the through-hole is maximum 0.8 mm, more preferably maximum 0.5 mm, larger than the diameter of the shank of the screw. An advantage of this embodiment is that the collar will extend tightly around the shank of the screw, which reduces the possibility for fiber material to migrate between the collar and the shank. The reduced possibility for such migration reduces the risk of bulging, and also increases the density, and thereby the strength, of the zone of compacted material.

The diameter of the through-hole of the supporting member may be within +/-0.8 mm, more preferably +/- 0.5 mm, of the diameter of the shank of the screw. This provides for easy assembly of the screw, and a strong zone of compacted material.

The thickness of the supporting member adjacent to its through hole may be in the range of 0.3 to 3.0 mm, more preferably the thickness is 0.3-0.7 mm when the supporting member is made from a metal material, and 0.5 to 3.0 mm, still more preferably 0.5-1.0 mm, when the supporting member is made from a plastic material. This will prevent bulging, as well as allow the threads of the screw to cut through the supporting member.

The supporting member may preferably be made from a metal material, preferably steel, aluminium, or a zinc alloy, such as zamak, or a plastic material, such as a fiber reinforced plastic material. These materials are strong also when they are provided in relatively low thicknesses, which means a supporting member that requires little space, is easy to be screwed through, and yet provides efficient prevention of bulging.

The disc-like member and the supporting member may be integrally formed. Hence improved manufacturing is achieved, as well as facilitated use of the supporting device.

The through-holes of the disc-like member and the supporting member may preferably be arranged concentrically. This provides for efficient and strong attachment of devices to the fiberboard panel.

The thickness of the disc-like member may be greater than the thickness of the supporting member. The disc-like member can thus be used for carrying loads, which makes it especially suitable for furniture applications.

The through-hole of the disc-like member may have, at least partly, a conical shape. This means that the disc-like member may accommodate a countersunk screw.

The through-hole of the disc-like member may be, at least along a portion of its length, tapered in the direction of the supporting member.

The supporting member may be located between the screw head and the end point of the thread in the situation when the screw has been tightened to the disc-like member.

The fiberboard supporting device may further comprise a positioning member for preventing rotation of the supporting member of the fiberboard supporting device. As the supporting member is prevented from rotating, improved fastening and reduced risk of bulging is achieved.

The diameter of the through-hole of the disc-like member may be equal to or greater than the major diameter of the threads. Hence, less effort will be required for attaching the supporting device to a fiberboard panel.

According to the invention, a fiberboard attachment kit is provided. The kit comprises at least one screw having a shank provided with threads, and a fiberboard supporting device. In particular, an attachment system is provided comprising a fiberboard panel and a fiberboard attachment kit. Preferably the fiberboard panel is a High Density Fiberboard (HDF) panel or a Medium Density Fiberboard (MDF) panel.

The fiberboard panel may have a thickness of 1 to 5 mm, more preferably 1.5 to 3 mm. For such dimensions, the supporting device has proven to be particularly useful.

According to the invention, a method for providing an attachment system for attaching a supporting device to a fiberboard panel is provided, according to claim 14. The method comprises:
providing at least one screw having a shank provided with threads, and providing a fiberboard supporting device. The fiberboard supporting device comprises a disc-like member having a through-hole for receiving said screw, and a supporting member arranged on a fiberboard panel side of the disc-like member and having a through-hole being aligned with the through-hole of the disc-like member, wherein the length of the screw is substantially greater than a total thickness of the disc-like member and the supporting member. The method further comprises configuring the diameter of the through-hole of the supporting member such that it is smaller than the major diameter of the threads, and is also smaller than the diameter of the through-hole of the disc-like member.

### Brief Description of Drawings

The invention will be described in further detail below under reference to the accompanying drawings, in which
Fig. 1 is a top view of a fiberboard panel and a fiberboard supporting device according to an embodiment;
Fig. 2a is a cross-sectional view of the fiberboard panel and the fiberboard supporting device shown in Fig. 1;
Fig. 2b is a cross-sectional view of a fiberboard panel and a fiberboard supporting device according to another embodiment;
Fig. 3a is a cross-sectional view of the fiberboard supporting device showing an enlargement around a screw;
Fig. 3b is a cross-sectional view of the screw of Fig. 3a, as seen in the direction of the arrows IIIb-IIIb, and illustrates the situation when the screw is in the process of being screwed through a supporting member;
Fig. 3c is a cross-sectional view of the screw shown in Fig. 3a, showing details of the material within the fiberboard panel;
Fig. 4 is a cross-sectional view of a fiberboard supporting device according to a second embodiment;
Fig. 5 is a cross-sectional view of a fiberboard supporting device according to a third embodiment;
Fig. 6 is a cross-sectional view of the fiberboard supporting device illustrated in Fig. 5 in combination with a different type of screw; and
Fig. 7 is a schematic view of a method according to an embodiment.

### Detailed Description

In the following description various embodiments of a fiberboard supporting device will be described, as well as attachment systems utilizing such supporting device.

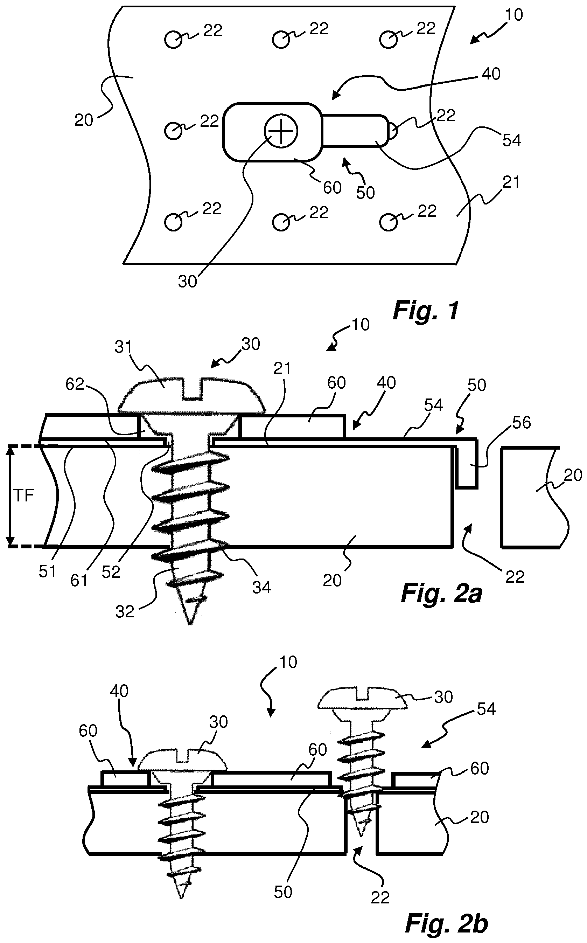

Starting in Figs. 1 and 2a an attachment system 10 is shown. The attachment system 10 includes a fiberboard panel 20 being, in this embodiment, provided with several pre-drilled holes 22. The fiberboard panel 20 could, for example, form part of a side piece of a cupboard or a bookcase, not shown. The fiberboard panel 20 may, for example, be a High Density Fiberboard (HDF) or a Medium Density Fiberboard (MDF) with a thickness TF of, for example, 1 to 5 mm. According to other embodiments the fiberboard panel could be of other types, such as particle board panels, chipboard panels, etc. in which a fiber material has been pressed to form a fiberboard panel.

The holes 22 are provided for facilitating the attachment of components to the fiberboard panel 20. Such components may, e.g., be brackets, rails, etc which are commonly used within the furniture industry. In addition to facilitating attachment, the holes 22 also provides improved alignment of the components, as the exact position of the components are determined by the positions of the holes 22.

The attachment system 10 also includes a fiberboard supporting device 40 being attached to the fiberboard panel 20 by means of a screw 30. Hence the attachment system 10 includes the fiberboard panel 20, the screw 30, and the fiberboard supporting device 40.

The fiberboard supporting device 40 may form part of a component to be attached to the fiberboard panel 20; for example, the fiberboard supporting device 40 may be formed integral with a roller slide rail, a shelf, etc. In other embodiments the fiberboard supporting device 40 is a separate component, such as a bracket, used for securely supporting additional components.

The fiberboard supporting device 40 comprises a supporting member 50. The supporting member 50 has a planar shape and is provided with a through-hole 52 adapted to receive the screw 30. One surface 51 of the planar supporting member 50 is in contact with an outer surface 21 of the fiberboard panel 20 during use.

The fiberboard supporting device 40 further comprises a disc-like member 60 being arranged on top of the supporting member 50, whereby the supporting member 50 is held between the disc-like member 60, at a fiberboard panel side 61 thereof, and the outer surface 21 of the fiberboard panel 20. The disc-like member 60 has a through-hole 62 which is aligned with the through-hole 52 of the supporting member 50. Preferably, the through-holes 52, 62 are arranged concentrically. The diameter of the through-hole 62 of the disc-like member 60 is chosen such that threads 34 of the screw 30 may pass through the through-hole 62, while a screw head 31 of the screw 30 is resting on the disc-like member 60.

The screw thus have a length which is substantially greater than the total thickness of the disc-like member 60 and the supporting member 50, when combined. Accordingly, the screw attaches the disc-like member 60 to the fiberboard panel 20.

The purpose of the supporting member is to ensure a rigid attachment of the disc-like member to the fiberboard panel 20 and to prevent material bulging.

The screw 30 has a screw shank 32 and the threads 34 run in a helical pattern externally around the shank 32. The dimensions of the through-hole 52 of the supporting member 50 are selected such that the shank 32 as well as the threads 34 may pass through; however the radial clearance between the shank 32 and the through-hole 52 should be small. In accordance with one embodiment, the diameter of the through-hole 52 of the supporting member 50 is selected such that it is greater than the diameter of the shank 32, but smaller than the major diameter of the threads 34, as will be described in more detail hereinafter. The major diameter of the threads 34 thus means the maximum diameter of the screw 30 along the shank 32. When the screw 30 is rotated, the threads 34 will thus cut through the periphery of the through-hole 52 as the screw 30 moves downwards into the fiberboard panel 20. Due to the limited clearance between the shank 32 and the through-hole 52 there will be no or very little fiberboard material which may be drawn upwards to the fiberboard panel surface causing bulging effects, as further described hereinafter.

In order to prevent rotation of the supporting member 50 a positioning member 54 may be formed at the supporting member 50. The positioning member 54 may, e.g., be provided as an extension of the supporting member 50 having a downwardly directed protrusion 56 for engagement with another hole 22 of the fiberboard panel 20, as is best illustrated in Fig. 2a. When the protrusion 56 is positioned correctly in a hole 22, the supporting member 50 will be prevented from rotating with the screw 30 during attachment of the supporting device 40.

In another embodiment, shown in Fig. 2b, an attachment system 10 is provided in which the positioning member 54 may be formed without a protrusion 56. Instead, the supporting device 40 may have two spaced-apart bores, each such bore representing the through-hole 52 of the supporting member 50 as well as the aligned through-hole 62 of the disc-like member 60. If one screw is lightly tightened in a hole 22 aligned with one bore, in Fig. 2b this is the right screw 30, this screw will prevent rotation of the supporting member 50 during tightening of the other screw, in Fig. 2b this is the left screw 30, in another hole 22 aligned with the other bore. Hence, in this first stage of tightening the left screw 30, which is what is illustrated in Fig. 2b, the right screw 30 functions as part of a positioning member 54 preventing the supporting member 50 from rotating. Correspondingly, the now tightened second screw, the left screw 30, will prevent rotation of the supporting member 50 during a subsequent tightening of the first screw, the right screw 30. Thus, in such second stage of tightening the right screw 30, the left screw 30 functions as part of a positioning member 54. Hence, in the embodiment of Fig. 2b the positioning member 54 is formed by a portion of the supporting device 40 having an additional bore/through-holes 52, 62 being spaced-apart from a first bore/through-holes 52, 62, and the positioning member 54 further involving first the right screw 30 and then the left screw 30.

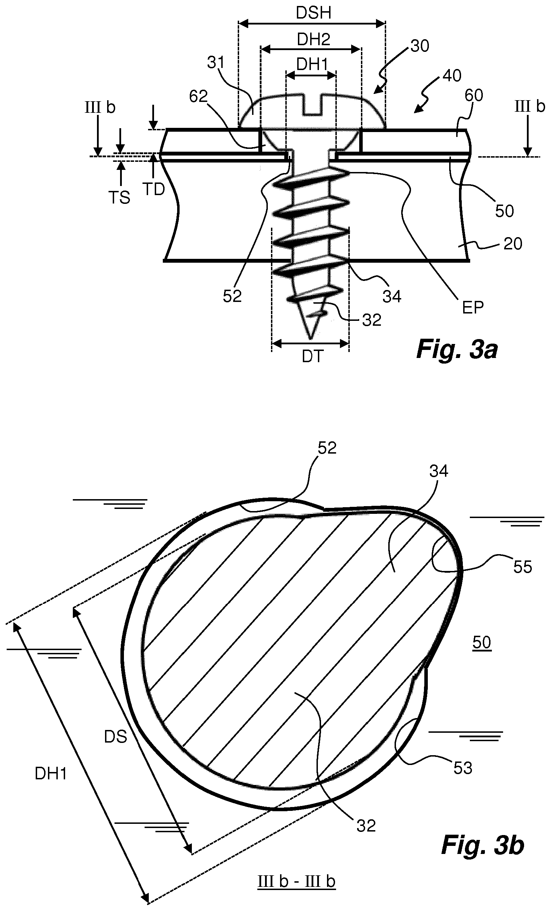

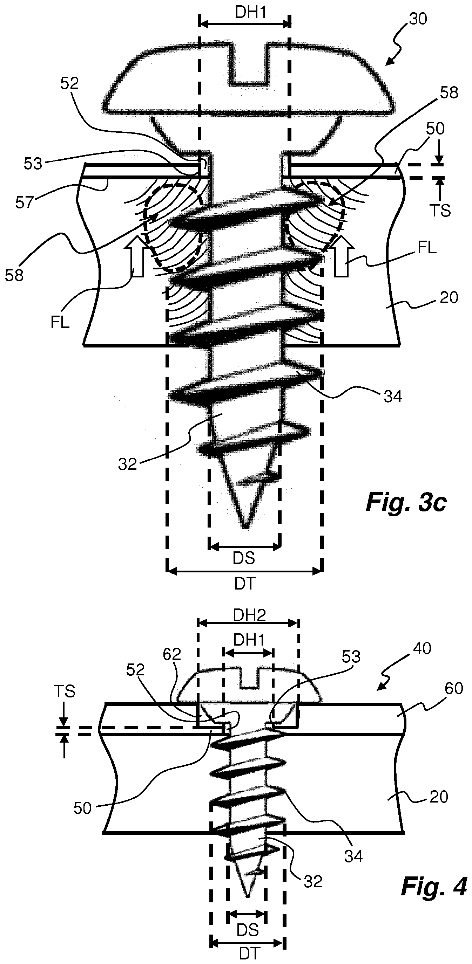

Figs. 3a-3c further illustrate the interaction between the screw 30 and the fiberboard supporting device 40. Fig. 3b is a cross-section through the supporting member 50 and the shank 32 taken along the line IIIb-IIIb of Fig. 3 a and illustrates the situation when the screw 30 is in the process of being screwed through the supporting member 50. Fig. 3b illustrates in more detail how a diameter DH1 of the through-hole 52 of the supporting member 50 is configured, in this embodiment, such that the diameter DH1 is equal to or greater than a diameter DS of the screw shank 32. Furthermore, as also illustrated in Fig.3a, the diameter DH1 of the through-hole 52 is smaller than the major diameter DT of the threads 34. Therefore, the threads 34 will cut an incision 55 in the supporting member 50, adjacent to the through hole 52, as the screw 30 is screwed therethrough, as illustrated in Fig. 3b. Since, as will be described hereinafter, the end point EP (see Fig. 3a) of the thread 34 preferably is located below the supporting member 50, the illustration of Fig. 3b illustrates the situation during the process of screwing the screw 30 into the supporting member 50, while the thread 34 will be located below the supporting member 50 when the screw 30 has been finally tightened.

Hence, the relation between the diameters is preferably as follows:DH1< DT and DH1 < DH2. The effect of hindering or at least substantially reducing bulging is more efficient with a tight fit between the shank 32 and the through hole 52.

The through hole 52 of the supporting member 50 may in some embodiments form a collar 53 around the shank 32 of the screw 30, wherein the diameter DH1 of the through-hole 52 is less than the sum of the diameter DS of the shank 32 and 0.25, more preferably 0.15, times the difference between the diameter DT of the threads 34 and the diameter DS of the shank 32. This means that DH1 < DS + 0,25*(DT-DS), more preferably DH1 < DS + 0,15*(DT-DS). The through hole 52 of the supporting member 50 will thus have a relatively small diameter DH1 and will enclose the periphery of the shank 32 in a tight manner such that fiber material will not be allowed to be forced upwards passing the supporting member 50.

According to a preferred embodiment the diameter DH1 of the through hole 52 is within +/- 0.8 mm, more preferably +/- 0.5 mm, of the diameter DS of the screw shank 32. Thereby, the through hole 52 will form the collar 53 which embraces, in a tight relation, the screw shank 32.

In some embodiments the screw shank 32 could even have a diameter DS which is slightly larger than the original diameter DH1 of the hole 52. In such case, the shank 32 would be pressed through the hole 52 as the screw 30 is inserted, thereby causing the shank 32 to widen the diameter DH1 of the hole 52 until the diameter DH1 is equal to the diameter DS. In such an embodiment it would normally be required that the original diameter DH1 of the hole 52 is maximum 0.8 mm, preferably maximum 0.5 mm, smaller than the diameter DS of the shank 32, to reduce the risk of undue deformation of the hole 52 occurring when the shank 32 is pressed therethrough.

In such embodiment, the collar 53 formed by means of the supporting member 50 and its through hole 52, is configured such that the diameter DH1 of the through-hole 52 is larger than the difference between the diameter DS of the shank 32 and 0.25, more preferably 0.15, times the difference between the diameter DT of the threads 34 and the diameter DS of the shank 32. This means that DH1 > DS - 0,25*(DT-DS), more preferably DH1 > DS - 0,15*(DT-DS). In this embodiment, it will be possible to screw the screw 30 through the through hole 52 of the supporting member 50 without excessive force, with less risk of deforming the supporting member 50.

Further, as can be seen in Fig. 3a, the supporting member 50 is in this embodiment provided as a part which is separate from the disc-like member 60. The disc-like member 60, could according to one embodiment, form part of a component which is to be mounted to the fiberboard panel 20. For example the disc-like member 60 could be a part of a bracket, rail etc. that is to be mounted to the fiberboard panel 20.

The through-hole 62 of the disc-like member 60 has a diameter DH2 which is smaller than a diameter DSH of the screw head 31. Thereby, the screw head 31 will, when the screw 30 is tightened to the fiberboard panel 20, apply pressure to the disc-like member 60 and press it towards the fiberboard panel 20. Hence, the main purpose of the disc-like member 60 is to distribute and to transmit force downwards to the fiberboard panel 20, as seen in the perspective of Fig. 3a, the pressure applied by the screw head 31.

Fig. 3c illustrates the effects occurring when inserting a screw 30 and using the supporting device 40 described hereinabove, although for the purpose of maintaining clarity of illustration the disc-like member 60 is not shown in Fig. 3c. As the screw 30 is tightened the threads 34 will start to lift fiber material of the fiberboard panel 20 upwards, as illustrated by means of the arrows FL in Fig. 3c. However, as the hole 52 of the supporting member 50 forms a tight collar 53 around the shank 32 the fiber material that is lifted upwards by the thread 34, in the direction of the arrows FL, cannot cause bulging, but instead this fiber material is compacted against the underside 57 of the supporting member 50 in the region of the collar 53. Thereby, a zone 58 of compacted fiber material is formed just below the collar 53, around the shank 32, and this zone 58 of compacted fiber material forms a particularly strong support for the thread 34. Thereby, instead of bulging and a weakening of the fastening of the screw 30 to the fiberboard panel 20, the supporting member 50 prevents the bulging, and results in a stronger fastening of the screw 30. Hence, the main purpose of the supporting member 50 is to form a support against which fiber material being pushed upwards, as seen in the perspective of Fig. 3c, is compacted to form a zone 58 of compacted material which provides good support for the thread 34 and prevents bulging.

According to a preferred embodiment, as illustrated in Fig. 3a, the supporting member 50 is located between the screw head 31 and the end point EP of the thread 34 in the situation when the screw 30 has been tightened to the disc-like member 60. In other words, and as is illustrated in Fig. 3a, the thread 34 has its end point EP located below the supporting member 50. An advantage is that the thread 34 will not itself work to lift up the supporting member 50; only the fiber material pushed upwards, in the direction of arrows FL as shown in Fig. 3c, will act upwardly on the supporting member 50.

The thickness TS of the supporting member 50 adjacent to the shank 32 should be sufficiently thin to enable the threads 34 to cut the incision 55 therethrough, but sufficiently thick to provide a collar 53 that provides a strong support against the fiber material lifted upwards in the direction FL. The material of the support member 50 is selected accordingly, to enable the threads 34 to pass through, and still provide support against the fiber material lifted upwards. According to a preferred embodiment, the support member 50 is, at least in the area of the collar 53, made from a metal material, such as steel, aluminium or a zinc alloy, such as a zamak alloy, or a plastic material, for example glass fiber reinforced plastic. According to a preferred embodiment the supporting member 50 has, at least in the area of the collar 53, a thickness TS of 0.3 to 3.0 mm. For supporting members 50 made from metal materials the thickness TS is preferably 0.3 to 0.7 mm. For plastic materials a slightly higher thickness TS is often suitable, such as a thickness TS of 0.5 to 3 mm, more preferably a thickness TS of 0.5 to 1.0 mm. Furthermore, the thickness TS of the supporting member 50 in the area of the collar 53 is preferably smaller than a thickness TD of the disc-like member 60. The thickness TD, illustrated in Fig. 3a, of the disc-like member 60 is typically 0.5 to 5 mm.

As described with reference to Figs. 3a-3c the fiberboard supporting device 40 comprises as its main parts the combination of:
the disc-like member 60 having the through-hole 62 for receiving the screw 30, the main purpose of the disc-like member 60 being to distribute and to transmit to the fiberboard panel 20 the pressure applied by the screw head 31, and
the supporting member 50 having the through-hole 52, wherein the diameter of the through-hole 52 is smaller than the major diameter of the threads 34, and is also smaller than the diameter of the through-hole 62 of the disc-like member 60, the main purpose of the supporting member 50 being to form the support against which fiber material pushed upwards is compacted to form the zone 58 of compacted material which provides good support for the threads 34 of screw 30.

Another embodiment is shown in Fig. 4, in which the same reference numerals are used for the same features. However, as can be seen in Fig. 4 the supporting member 50 and the disc-like member 60 are integrally formed. Hence, the supporting member 50 protrudes as a flange extending radially inwards from the lower part of the through-hole 62 of the disc-like member 60. The supporting member 50 has a thickness TS which is similar to that described hereinabove with reference to Fig. 3a, and is provided with a through hole 52 which will form a collar 53 which embraces, in a tight relation, the screw shank 32. The relation between diameter DH1 of the through-hole 52 of the supporting member 50 and the diameter DS of the screw shank 32 and the diameter DT of the threads 34 and the diameter DH2 of through hole 62 of the disc-like member 60 may be configured according to principles similar to what has been described hereinbefore with reference to Fig. 3b.

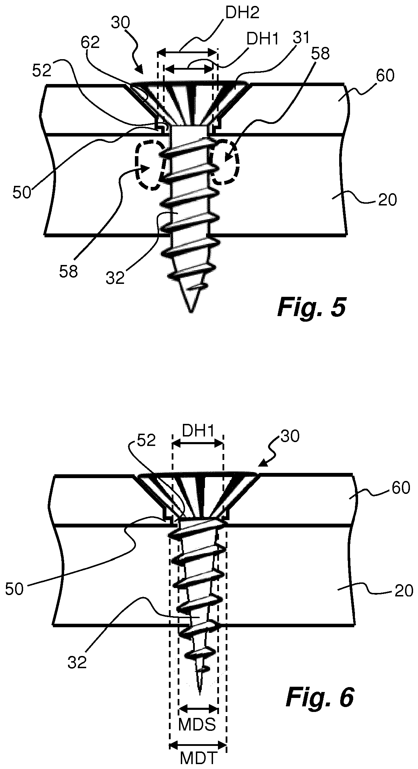

A further embodiment of the fiberboard supporting device 40 is shown in Fig. 5. The supporting device 40 is similar to the embodiment shown in Fig. 4, except for the configuration of the disc-like member 60 and its through-hole 62. Here, the through-hole 62 is conically shaped, wherein the conical shape extends from the upper surface of the disc-like member 60 to a lower portion of the through-hole 62 at which the radial flange forming the supporting member 50, being provided with the through hole 52, protrudes inwardly. This configuration is particularly useful for screws having a countersunk head, whereby the screw head 31 will be allowed to fit into the through-hole 62. Also in this embodiment the diameter DH1 of the through-hole 52 of the supporting member 50 is smaller than the diameter DH2 of the through-hole 62 of the disc-like member 60, the diameter DH2 of the through-hole 62 being its smallest diameter as shown in fig. 5.

When the screw 30 is tightened the screw head 31 will rest against the conical through-hole 62, meaning that the disc-like member 60 will still be that part which distributes and transmits downwards to the fiberboard panel 20 the pressure applied by the screw head 31, while the supporting member 50 forms the support against which fiber material lifted upwards is compacted to form the zone 58 of compacted material.

A yet further embodiment of a fiberboard attachment kit, including a fiberboard supporting device 40 and a screw 30, is shown in Fig. 6. Here, the fiberboard supporting device 40 is the same as the supporting device 40 shown in Fig. 4. The screw 30 is however different, now having a tapered shank 32. For this embodiment, the diameter DH1 of the through hole 52 of the supporting member 50 is chosen such that it is greater than the maximum diameter MDS of the shank 32, but smaller than the maximum major diameter MDT of the threads 34. Preferably, the relation between diameter DH1 of the through-hole 52 of the supporting member 50 and the maximum diameter MDS of the screw shank 32 may be configured according to principles similar to what has been described hereinbefore with reference to Fig. 3b with regard to the relation between the diameters DH1 and DS.

As is readily understood, the screw 30 shown in Fig. 6 could be used with a fiberboard supporting device 40 as shown in Figs. 3a-c, or 5 as well. Further, each one of the fiberboard supporting devices 40 described above could have a positioning member 54 in line with the description relating to Figs. 1 and 2.

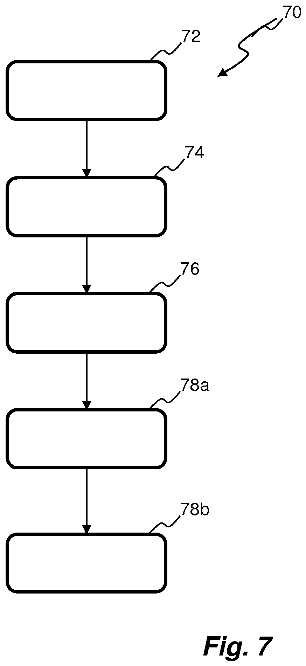

Now turning to Fig. 7 a method 70 for providing an attachment system will be described. The attachment system is used for attaching a supporting device 40 to a fiberboard panel 20, and comprises a first step 72 of providing at least one screw 30 having a shank 32 provided with threads 34. The method also includes a step 74 of providing a fiberboard supporting device 40 having a disc-like member 60. The disc-like member 60 is having a through-hole 62 for receiving the screw 30. A step 76 is also performed, in which the fiberboard supporting device 40 is further provided with a supporting member 50, which is arranged on one side of the disc-like member 60 facing the fiberboard panel 20. The supporting member 50 is having a through-hole 52 being aligned with the through-hole 62 of the disc-like member 60. The method also comprises the step 78a of configuring the diameter DH1 of the through-hole 52 of the supporting member 50 such that it is smaller than the major diameter DT of the threads 34 and a step 78b of configuring the diameter DH1 of the through-hole 52 of the supporting member 50 such that it is also smaller than the diameter DH2 of the through-hole 62 of the disc-like member 60.

It will be appreciated that numerous variants of the above described embodiments are possible within the scope of the appended claims.

Hereinbefore it has been described that the positioning member 54 has a downwardly directed protrusion 56 for engagement with another hole 22 of the fiberboard panel 20. It will be appreciated that other types of positioning members are also possible, including, for example, positioning members that hold the supporting member 50 relative to the disc-like member 60.

## Claims

1. A fiberboard attachment kit, comprising
at least one screw (30) having a shank (32) provided with threads (34), and
a fiberboard supporting device (40) adapted for connecting devices to fiberboard panels (20), comprising
a disc-like member (60) having a through-hole (62) for receiving said screw (30), and
a supporting member (50) arranged on a fiberboard panel side (61) of the disc-like member (60) to ensure rigid attachment of the disc-like member (60) to the fiberboard panel (20) thereby preventing material bulging, wherein the supporting member (50) has a through-hole (52) being aligned with the through-hole (62) of the disc-like member (60), wherein the diameter (DH1) of the through-hole (52) of the supporting member (50) is smaller than the major diameter (DT) of the threads (34) and is also smaller than the diameter (DH2) of the through-hole (62) of the disc-like member (60), wherein the length of the screw (30) is substantially greater than a total thickness of the disc-like member (60) and the supporting member (50).

2. The fiberboard attachment kit according to claim 1, wherein the supporting member (50) is adapted to lie between the disc-like member (60) and a fiberboard panel (20) to which the fiberboard supporting device (40) is to be connected.

3. The fiberboard attachment kit according to any of the preceding claims, wherein the diameter (DH2) of the through-hole (62) of the disc-like member (60) is smaller than the diameter (DSH) of a screw head (31) of the screw (30).

4. The fiberboard attachment kit according to any of the preceding claims, wherein the through hole (52) of the supporting member (50) forms a collar (53) around the shank (32) of the screw (30), wherein the diameter (DH1) of the through-hole (52) is less than the sum of the diameter (DS) of the shank (32) and 0.25, more preferably 0.15, times the difference between the diameter (DT) of the threads (34) and the diameter (DS) of the shank (32), and wherein optionally the through hole (52) of the supporting member (50) forms a collar (53) around the shank (32) of the screw (30), wherein the diameter (DH1) of the through-hole (52) is larger than the difference between the diameter (DS) of the shank (32) and 0.25, more preferably 0.15, times the difference between the diameter (DT) of the threads (34) and the diameter (DS) of the shank (32).

5. The fiberboard attachment kit according to any of the preceding claims, wherein the through hole (52) of the supporting member (50) forms a collar (53) around the shank (32) of the screw (30), wherein the diameter (DH1) of the through-hole (52) is maximum 0.8 mm, more preferably maximum 0.5 mm, larger than the diameter (DS) of the shank (32) of the screw (30), wherein optionally the diameter (DH1) of the through-hole (52) of the supporting member (50) is within +/- 0.8 mm, more preferably +/- 0.5 mm, of the diameter (DS) of the shank (32) of the screw (30).

6. The fiberboard attachment kit according to any of the preceding claims, wherein the thickness (TS) of the supporting member (50) adjacent to the through hole (52) is in the range of 0.3 to 3.0 mm, more preferably the thickness (TS) is 0.3-0.7 mm when the supporting member (50) is made from a metal material, and 0.5 to 3.0 mm, still more preferably 0.5-1.0 mm, when the supporting member (50) is made from a plastic material.

7. The fiberboard attachment kit according to any of the preceding claims, wherein the supporting member (50) is made from a metal material, preferably steel, aluminium or zinc alloy, or from a plastic material.

8. The fiberboard attachment kit according to any of the preceding claims, wherein the disc-like member (60) and the supporting member (50) are integrally formed.

9. The fiberboard attachment kit according to any of the preceding claims, wherein the through-holes (62, 52) of the disc-like member (60) and the supporting member (50) are arranged concentrically.

10. The fiberboard attachment kit according to any one of the preceding claims, wherein the thickness (TD) of the disc-like member (60) is greater than the thickness (TS) of the supporting member (50).

11. The fiberboard attachment kit according to any one of the preceding claims, wherein the through-hole (62) of the disc-like member (60) has, at least partly, a conical shape, wherein optionally the through-hole (62) of the disc-like member (60) is, at least along a portion of its length, tapered in the direction of the supporting member (50).

12. The fiberboard attachment kit according to any one of the preceding claims, wherein the supporting member (50) is located between the screw head (31) and the end point (EP) of the threads (34) in the situation when the screw (30) has been tightened to the disc-like member (60), wherein the fiberboard supporting device (40) optionally further comprises a positioning member (54; 30) for preventing rotation of the supporting member (50) of the fiberboard supporting device (40), and wherein optionally the diameter (DH2) of the through-hole (62) of the disc-like member (60) is equal to or greater than the major diameter (DT) of the threads (34).

13. An attachment system, comprising a fiberboard panel (20) and a fiberboard attachment kit according to any of claims 1 through 12, preferably the fiberboard panel (20) being a High Density Fiberboard (HDF) panel or a Medium Density Fiberboard (MDF) panel, wherein optionally the fiberboard panel (20) has a thickness (TF) of 1 to 5 mm, more preferably 1.5 to 3 mm.

14. A method for providing an attachment system for attaching a supporting device (40) to a fiberboard panel (20), comprising:
providing at least one screw (30) having a shank (32) provided with threads (34),
providing a fiberboard supporting device (40) adapted for connecting devices to fiberboard panels (20), comprising:
a disc-like member (60) having a through-hole (62) for receiving said screw (30), and a supporting member (50) arranged on a fiberboard panel side (61) of the disc-like member (60) to enable rigid attachment of the disc-like member (60) to the fiberboard panel (20) thereby preventing material bulging and having a through-hole (52) being aligned with the through-hole (62) of the disc-like member (60), wherein the length of the screw (30) is substantially greater than a total thickness of the disc-like member (60) and the supporting member (50),
configuring the diameter (DH1) of the through-hole (52) of the supporting member (50) such that it is smaller than the major diameter (DT) of the threads (34), and is also smaller than the diameter (DH2) of the through-hole (62) of the disc-like member (60).

## Patentansprüche

1. Befestigungssatz für eine Faserplatte, umfassend mindestens eine Schraube (30) mit einem Schaft (32), der mit einem Gewinde (34) versehen ist, und eine Faserplattenstützvorrichtung (40), die zum Verbinden von Vorrichtungen mit Faserplatten (20) eingerichtet ist, umfassend ein scheibenartiges Element (60) mit einer Durchgangsbohrung (62) zur Aufnahme der Schraube (30), und ein Stützelement (50), das auf einer Faserplattenseite (61) des scheibenartigen Elements (60) angeordnet ist, um eine starre Befestigung des scheibenartigen Elements (60) an der Faserplatte (20) zu gewährleisten und dadurch ein Ausbeulen des Materials zu verhindern, wobei das Stützelement (50) ein Durchgangsloch (52) aufweist, das mit dem Durchgangsloch (62) des scheibenartigen Teils (60) ausgerichtet ist, wobei der Durchmesser (DH1) des Durchgangslochs (52) des Stützelements (50) kleiner ist als der Hauptdurchmesser (DT) des Gewindes (34) und auch kleiner ist als der Durchmesser (DH2) des Durchgangslochs (62) des scheibenförmigen Elements (60), wobei die Länge der Schraube (30) wesentlich größer ist als eine Gesamtdicke des scheibenförmigen Elements (60) und des Stützelements (50).

2. Befestigungssatz für eine Faserplatte nach Anspruch 1, wobei das Stützelement (50) so ausgebildet ist, dass es zwischen dem scheibenförmigen Element (60) und einer Faserplatte (20) zu liegen kommt, mit der die Faserplattenstützvorrichtung (40) verbunden werden soll.

3. Befestigungssatz für eine Faserplatte nach einem der vorhergehenden Ansprüche, wobei der Durchmesser (DH2) des Durchgangslochs (62) des scheibenförmigen Elements (60) kleiner ist kleiner ist als der Durchmesser (DSH) eines Schraubenkopfes (31) der Schraube (30).

4. Befestigungssatz für eine Faserplatte nach einem der vorhergehenden Ansprüche, wobei die Durchgangsbohrung (52) des Stützelements (50) einen Kragen (53) um den Schaft (32) der Schraube (30) bildet, wobei der Durchmesser (DH1) des Durchgangslochs (52) kleiner ist als die Summe aus dem Durchmesser (DS) des Schafts (32) und 0,25, vorzugsweise 0,15, mal die Differenz zwischen dem Durchmesser (DT) des Gewindes (34) und dem Durchmesser (DS) des Schaftes (32) beträgt, und wobei gegebenenfalls das Durchgangsloch (52) des Stützteils (50) einen Kragen (53) um den Schaft (32) der Schraube (30) bildet, wobei der Durchmesser (DH1) des Durchgangslochs (52) größer ist als die Differenz zwischen dem Durchmesser (DS) des Schafts (32) und das 0,25-fache, vorzugsweise das 0,15-fache, der Differenz zwischen dem Durchmesser (DT) der Gewindegänge (34) und dem Durchmesser (DS) des Schaftes (32) ist.

5. Befestigungssatz für eine Faserplatte nach einem der vorhergehenden Ansprüche, wobei das Durchgangsloch (52) des Stützelements (50) einen Kragen (53) um den Schaft (32) der Schraube (30) bildet, wobei der Durchmesser (DH1) des Durchgangslochs (52) maximal 0,8 mm, mehr bevorzugt maximal 0,5 mm, größer ist als der Durchmesser (DS) des Schafts (32) der Schraube (30), wobei optional der Durchmesser (DH1) des Durchgangslochs (52) des Stützelements (50) innerhalb von +/- 0,8 mm, vorzugsweise +/- 0,5 mm, des Durchmessers (DS) des Schafts (32) der Schraube (30) liegt.

6. Befestigungssatz für eine Faserplatte nach einem der vorhergehenden Ansprüche, wobei die Dicke (TS) des Stützelements (50) in der Nähe des Durchgangslochs (52) im Bereich von 0,3 bis 3,0 mm liegt, wobei die Dicke (TS) vorzugsweise 0,3-0,7 mm beträgt wenn das Stützelement (50) aus einem Metallmaterial besteht, und 0,5 bis 3,0 mm, noch mehr bevorzugt 0,5-1,0 mm, wenn das Stützelement (50) aus einem Kunststoffmaterial besteht.

7. Befestigungssatz für eine Faserplatte nach einem der vorhergehenden Ansprüche, wobei das Stützelement (50) aus einem Metallmaterial, vorzugsweise Stahl, Aluminium oder einer Aluminium- oder Zinklegierung, oder aus einem Kunststoffmaterial besteht.

8. Befestigungssatz für eine Faserplatte nach einem der vorangehenden Ansprüche, wobei das scheibenartige Element (60) und das Stützelement (50) einstückig geformt sind.

9. Befestigungssatz für eine Faserplatte nach einem der vorhergehenden Ansprüche, wobei die Durchgangslöcher (62, 52) des scheibenartigen Elements (60) und des Stützelements (50) konzentrisch angeordnet sind.

10. Befestigungssatz für eine Faserplatte nach einem der vorangehenden Ansprüche, wobei die Dicke (TD) des scheibenartigen Elements (60) größer ist als die Dicke (TS) des Stützelements (50) ist.

11. Befestigungssatz für eine Faserplatte nach einem der vorangehenden Ansprüche, wobei das Durchgangsloch(62) des scheibenartigen Elements (60) zumindest teilweise eine konische Form aufweist, wobei optional das Durchgangsloch (62) des scheibenartigen Elements (60) zumindest entlang eines Abschnitts seiner Länge in Richtung des Stützelements (50) verjüngt ist.

12. Befestigungssatz für eine Faserplatte nach einem der vorangehenden Ansprüche, wobei sich das Stützelement (50) zwischen dem Schraubenkopf (31) und dem Endpunkt (EP) des Gewindes (34) befindet, in dem Fall, dass die Schraube (30) in das scheibenartige Element (60) fest eingedreht ist, wobei die Faserplattenstützvorrichtung (40) optional ein Positionierungselement (54; 30) aufweist, um eine Drehung des Stützelementes (50) der Faserplattenstützvorrichtung (40) zu verhindern, und wobei optional der Durchmesser (DH2) des Durchgangslochs (62) des scheibenartigen Elements (60) gleich oder größer ist als der Hauptdurchmesser (DT) des Gewindes (34).

13. Befestigungssystem, umfassend eine Faserplatte (20) und einen Faserplattenbefestigungssatz nach einem der Ansprüche 1 bis 12, wobei vorzugsweise die Faserplatte (20) eine Platte aus High Density Fiberboard (HDF, hochdichte Faserplatte) oder eine Platte aus Medium Density Fiberboard (MDF, mitteldichte Faserplatte)-Platte ist, wobei optional die Faserplatte (20) eine Dicke (TF) von 1 bis 5 mm, vorzugsweise 1,5 bis 3 mm, aufweist.

14. Verfahren zum Bereitstellen eines Befestigungssystems zum Befestigen einer Stützvorrichtung (40) an einer Faserplatte (20), umfassend:
Bereitstellen mindestens einer Schraube (3 0) mit einem Schaft (32), der ein Gewinde (34) aufweist,
Bereitstellen einer Faserplattenstützvorrichtung (40), die zum Verbinden von Vorrichtungen mit Faserplatten (20) geeignet ist, umfassend:
ein scheibenartiges Element (60) mit einer Durchgangsbohrung (62) zur Aufnahme der Schraube (30), und ein Stützelement (50), das auf einer Faserplattenseite (61) des scheibenartigen Elements (60) angeordnet ist, um eine starre Befestigung des scheibenartigen Elements (60) an der Faserplatte (20) zu ermöglichen, wodurch ein Ausbeulen des Materials verhindert wird, und ein Durchgangsloch (52) aufweist, das mit dem Durchgangsloch (62) des scheibenartigen Elements (60) ausgerichtet ist, wobei die Länge der Schraube (30) wesentlich größer ist als eine Gesamtdicke des scheibenartigen Elements (60) und des Stützelements (50),
Konfigurieren des Durchmessers (DH1) des Durchgangslochs (52) des Stützelements (50) so, dass er kleiner ist als der Hauptdurchmesser (DT) des Gewindes (34) und auch kleiner ist als der Durchmesser (DH2) des Durchgangslochs (62) des scheibenartigen Elementes (60).

## Revendications

1. Kit de fixation de panneau de fibres, comprenant
au moins une vis (30) comportant une tige (32) dotée de filets (34), et
un dispositif de support de panneau de fibres (40) conçu pour assembler des dispositifs à des panneaux de panneau de fibres (20), comprenant
un élément de type disque (60) comportant un trou traversant (62) destiné à recevoir ladite vis (30), et
un élément de support (50) disposé d'un côté panneau de panneau de fibres (61) de l'élément de type disque (60) pour garantir une fixation rigide de l'élément de type disque (60) au panneau de panneau de fibres (20) empêchant ainsi un gonflement de matériau, dans lequel l'élément de support (50) comporte un trou traversant (52) qui est aligné avec le trou traversant (62) de l'élément de type disque (60), dans lequel le diamètre (DH1) du trou traversant (52) de l'élément de support (50) est plus petit que le diamètre majeur (DT) des filets (34) et est également plus petit que le diamètre (DH2) du trou traversant (62) de l'élément de type disque (60), dans lequel la longueur de la vis (30) est sensiblement supérieure à une épaisseur totale de l'élément de type disque (60) et de l'élément de support (50).

2. Kit de fixation de panneau de fibres selon la revendication 1, dans lequel l'élément de support (50) est conçu pour se trouver entre l'élément de type disque (60) et un panneau de panneau de fibres (20) auquel doit être assemblé le dispositif de support de panneau de fibres (40).

3. Kit de fixation de panneau de fibres selon l'une quelconque des revendications précédentes, dans lequel le diamètre (DH2) du trou traversant (62) de l'élément de type disque (60) est plus petit que le diamètre (DSH) d'une tête de vis (31) de la vis (30).

4. Kit de fixation de panneau de fibres selon l'une quelconque des revendications précédentes, dans lequel le trou traversant (52) de l'élément de support (50) forme une collerette (53) autour de la tige (32) de la vis (30), dans lequel le diamètre (DH1) du trou traversant (52) est plus petit que la somme du diamètre (DS) de la tige (32) et de 0,25, on préfère davantage de 0,15 fois la différence entre le diamètre (DT) des filets (34) et le diamètre (DS) de la tige (32), et dans lequel le trou traversant (52) de l'élément de support (50) forme éventuellement une collerette (53) autour de la tige (32) de la vis (30), dans lequel le diamètre (DH1) du trou traversant (52) est plus grand que la différence entre le diamètre (DS) de la tige (32) et 0,25, on préfère davantage 0,15 fois la différence entre le diamètre (DT) des filets (34) et le diamètre (DS) de la tige (32).

5. Kit de fixation de panneau de fibres selon l'une quelconque des revendications précédentes, dans lequel le trou traversant (52) de l'élément de support (50) forme une collerette (53) autour de la tige (32) de la vis (30), dans lequel le diamètre (DH1) du trou traversant (52) est 0,8 mm au maximum, on préfère davantage 0,5 mm au maximum, plus grand que le diamètre (DS) de la tige (32) de la vis (30), dans lequel le diamètre (DH1) du trou traversant (52) de l'élément de support (50) s'inscrit éventuellement dans une tolérance de +/-0,8 mm, on préfère davantage de +/-0,5 mm, du diamètre (DS) de la tige (32) de la vis (30).

6. Kit de fixation de panneau de fibres selon l'une quelconque des revendications précédentes, dans lequel l'épaisseur (TS) de l'élément de support (50) au voisinage du trou traversant (52) s'inscrit dans la plage de 0,3 à 3,0 mm, on préfère davantage que l'épaisseur (TS) soit comprise entre 0,3 et 0,7 mm lorsque l'élément de support (50) est constitué d'un matériau métallique, et entre 0,5 et 3,0 mm, on préfère encore davantage entre 0,5 et 1,0 mm, lorsque l'élément de support (50) est constitué d'une matière plastique.

7. Kit de fixation de panneau de fibres selon l'une quelconque des revendications précédentes, dans lequel l'élément de support (50) est constitué d'un matériau métallique, de préférence d'alliage d'acier, d'aluminium ou de zinc, ou d'une matière plastique.

8. Kit de fixation de panneau de fibres selon l'une quelconque des revendications précédentes, dans lequel l'élément de type disque (60) et l'élément de support (50) sont formés d'une seule pièce.

9. Kit de fixation de panneau de fibres selon l'une quelconque des revendications précédentes, dans lequel les trous traversants (62, 52) de l'élément de type disque (60) et de l'élément de support (50) sont disposés concentriquement.

10. Kit de fixation de panneau de fibres selon l'une quelconque des revendications précédentes, dans lequel l'épaisseur (TD) de l'élément de type disque (60) est plus grande que l'épaisseur (TS) de l'élément de support (50).

11. Kit de fixation de panneau de fibres selon l'une quelconque des revendications précédentes, dans lequel le trou traversant (62) de l'élément de type disque (60) a, au moins partiellement, une forme conique, dans lequel le trou traversant (62) de l'élément de type disque (60) est éventuellement, au moins sur une partie de sa longueur, conique en direction de l'élément de support (50).

12. Kit de fixation de panneau de fibres selon l'une quelconque des revendications précédentes, dans lequel l'élément de support (50) est situé entre la tête de vis (31) et le point d'extrémité (EP) des filets (34) dans la situation dans laquelle la vis (30) a été serrée sur l'élément de type disque (60), dans lequel le dispositif de support de panneau de fibres (40) comprend en outre éventuellement un élément de positionnement (54 ; 30) destiné à empêcher une rotation de l'élément de support (50) du dispositif de support de panneau de fibres (40), et dans lequel le diamètre (DH2) du trou traversant (62) de l'élément de type disque (60) est éventuellement égal ou supérieur au diamètre majeur (DT) des filets (34).

13. Système de fixation, comprenant un panneau de panneau de fibres (20) et un kit de fixation de panneau de fibres selon l'une quelconque des revendications 1 à 12, le panneau de panneau de fibres (20) étant de préférence un panneau de panneau de fibres haute densité (HDF) ou un panneau de panneau de fibres moyenne densité (MDF), dans lequel le panneau de panneau de fibres (20) a éventuellement une épaisseur (TF) comprise entre 1 et 5 mm, on préfère davantage entre 1,5 et 3 mm.

14. Procédé d'utilisation d'un système de fixation pour fixer un dispositif de support (40) à un panneau de panneau de fibres (20), comprenant les étapes consistant à :
utiliser au moins une vis (30) comportant une tige (32) dotée de filets (34),
utiliser un dispositif de support de panneau de fibres (40) conçu pour assembler des dispositifs à des panneaux de panneau de fibres (20), comprenant :
un élément de type disque (60) comportant un trou traversant (62) destiné à recevoir ladite vis (30), et un élément de support (50) disposé d'un côté panneau de panneau de fibres (61) de l'élément de type disque (60) pour permettre une fixation rigide de l'élément de type disque (60) au panneau de panneau de fibres (20), empêchant ainsi un gonflement de matériau, et comportant un trou traversant (52) qui est aligné avec le trou traversant (62) de l'élément de type disque (60), dans lequel la longueur de la vis (30) est sensiblement supérieure à une épaisseur totale de l'élément de type disque (60) et de l'élément de support (50),
configurer le diamètre (DH1) du trou traversant (52) de l'élément de support (50) de sorte qu'il soit plus petit que le diamètre majeur (DT) des filets (34), et qu'il soit également plus petit que le diamètre (DH2) du trou traversant (62) de l'élément de type disque (60).
